# EUROPEAN PATENT APPLICATION

(11) **EP 3 965 058 A1**
(43) Date of publication of application: **09.03.2022**
(21) Application number: 20194268.7
(22) Date of filing: 03.09.2020
(51) Int. Cl.: G06T 7/00

(54) **METHOD FOR AUTOMATICALLY DETERMINING THE EFFECT OF A TEST COMPOUND ON NEURAL CELLS**

(71) Applicant: IUF Leibnitz-Institut für Umweltmedizinische Forschung gGmbH, 40225 Düsseldorf (DE)
(72) Inventor: The designation of the inventor has not yet been filed
(74) Representative: dompatent von Kreisler Selting Werner - Partnerschaft von Patent- und Rechtsanwälten mbB

(57) **Abstract**

The invention comprises a method (100) for automatically determining the effect of a test compound on neural cells (34). According to the method, a target sample (16) is provided in a testing chamber (15), wherein the target sample (16) comprises a neurosphere (20) and a test sample (18) is provided in the testing chamber (15), wherein the test sample (18) comprises the test compound. After a predetermined incubation time, an image (22) of the target sample (16) is acquired using an image acquisition module (24), wherein the image acquisition module (24) comprises at least an image sensor (26) and a lens (28) for imaging the target sample (16) onto the image sensor (26). The effect of the test compound is determined by analyzing the acquired image (22) using an image evaluation module (30), wherein the image evaluation module (30) is configured to apply a machine learning algorithm (140) to identify the effect of the test compound. The determined effect of the test compound is output using an outputting module (32).

## Description

The present invention relates to a method for automatically determining the effect of a test compound on neural cells and a corresponding measurement apparatus.

In particular, the present invention relates to a method for determining the toxicity of a test compound and its negative effect on neural cells. The results achieved by such a method might be directly used to evaluate the expected effect on the human brain.

In addition, the method according to the present invention also allows to determine the positive effects of a test compound on neural cells. If such a positive effect can be determined for a specific test compound, the analyzed test compound might qualify as a medical substance suitable for treating diseases.

Methods for determining effects of chemical compounds are known from the prior art. However, the methods known so far require a large number of manually performed steps in order to reliably determine e.g. the toxicity of a test compound. Hence, such methods are rather time-consuming and/or show a rather low reproducibility.

In view of the drawbacks of the known methods, the main problem underlying the present invention is to provide a method and a corresponding measurement apparatus that allow an efficient and reliable analysis of a test compound to determine its effect on neural cells.

In order to solve the described problem, a method for automatically determining the effect of a test compound on neural cells is provided according to the present invention, wherein the method comprises at least the following steps:
- providing a target sample in a testing chamber, wherein the target sample comprises a neurosphere;
- providing a test sample in the testing chamber, wherein the test sample comprises the test compound;
- acquiring an image of the target sample after a predetermined incubation time using an image acquisition module, wherein the image acquisition module comprises at least an image sensor and a lens for imaging the target sample onto the image sensor;
- determining the effect of the test compound by analyzing the acquired image using an image evaluation module, wherein the image evaluation module is configured to apply a machine learning algorithm to identify the effect of the test compound; and
- outputting the determined effect of the test compound using an outputting module.

The present invention allows an automated analysis of a test sample enabling high reproducibility and short measurement times. The application of the machine learning algorithm further allows to more efficiently analyze the biochemical interaction between the target sample and the test sample. Also, the application of the machine learning algorithm contributes to an increased reproducibility, since manual steps assessing the acquired image are replaced or at least significantly reduced by applying the machine learning algorithm.

The present invention allows to determine adverse effects of the test compound on the neural cells, such as the toxicity of the test compound. In addition, the present invention also allows to determine beneficial effects of the test compound on the neural cells. If such beneficial effects are determined, the test compound might be further tested as a candidate for a medical compound used in drugs.

The effect on neural cells is determined by analyzing the interaction between the neurosphere and the test compound.

Within the scope of the present invention, neurospheres refer to an aggregation of neural cells, that typically grow in a sphere-like shape. The person skilled in the art acknowledges that a neurosphere does usually not have a perfectly spherical shape. A neurosphere might be grown from human neural progenitor cells (hNPC). Human NPC might be commercially acquired or, alternatively, generated from human brain or human induced pluripotent stem cells. A neurosphere might be cultured in DMEM/F12 with B27 supplement adding EGF and FGF. A neurosphere might have a diameter of approximately 200 µm, 300 µm or 400 µm. However, the present invention is not limited to a specific size or type of neurospheres. In order to compensate stochastic deviations within the method according to the invention, multiple neurospheres (e.g. 5, 10, 25 or 50) might be applied. In this way, any possible deviations that potentially might occur can be detected and considered during the measurement and evaluation process.

The test sample might comprise a test compound such as e.g. Acrylamide, MeHgCl, EGF or Vitamin C.

The target sample might be provided in the testing chamber using a target sample providing module. The target sample providing module might comprise a storage chamber, a supply tube and a pump. Alternatively, the target sample might be provided in the testing chamber manually. Depending on the requirements of the specific application, the degree of automation might be adjusted.

The test sample might be provided in the testing chamber using a test sample providing module. The test sample providing module might comprise a storage chamber, a supply tube and a pump. Alternatively, the test sample might be provided in the testing chamber manually, depending on the requirements of the specific application and the desired degree of automation.

After the target sample and the test sample are combined in the testing chamber, the combined sample might incubate for a predetermined incubation time. The incubation time might differ depending on the used neurosphere and test compound. Typically, the incubation time might be one, two, three, four or five days. After the predetermined incubation time, an image of the target sample is acquired using an image acquisition module and, subsequently, evaluated. The image acquisition module might comprise a CCD- or CMOS-sensor. Also, the image acquisition module might comprise a single lens or a lens system, such as a microscope objective (e. g. a Zeiss LD Plan Neofluar 20x/0.4 objective).

Analyzing the acquired image is performed using a machine learning algorithm, where different implementations of various machine learning algorithms are possible for the purpose of the present invention, some of which will be discussed in detail in the following sections. The application of the machine learning algorithm for the analysis of the effect of the test compound on neural cells allows to significantly increase the efficiency of the analysis method as well as its reproducibility.

After evaluating the acquired image, the results of the evaluation are outputted using an outputting module, wherein the outputting module preferably comprises a display for displaying the determined results to the user. Alternatively, the outputting module might comprise an acoustic outputting device for acoustically outputting the results to the user. However, the skilled person will acknowledge that the present invention is not limited to outputting modules comprising a display or an acoustic outputting device.

According to one embodiment of the present invention, analyzing the acquired image using an image evaluation module comprises the following steps:
- inputting the acquired image into a pre-trained classifier, wherein the classifier is trained using a machine learning algorithm; and
- classifying the test compound using the pre-trained classifier.

This embodiment of the invention provides an approach that is entirely based on a machine learning algorithm without the need of any further image detection and/or image processing algorithm. Hence, a significantly efficient analysis of the test compound can be enabled using this approach. This approach allows a simple and highly accurate analysis of the test compounds, when compared to the prior art methods. In particular, if a large amount of training data is provided, this embodiment allows a significant improvement when compared to test sample analysis methods as known from the prior art. This approach might also be understood as a "full-AI-approach", since the approach applies artificial intelligence as the key tool in analyzing the test compound and since no additional algorithms or manual steps need to be applied.

The pre-trained classifier might be trained by providing a preferably large amount of training data. Different alternatives for training the classifier are possible. As an example, the training data might comprise images of different target samples, wherein the images were acquired after the target sample and the test sample have been combined and after a predefined incubation time. The training data might also comprise labels corresponding to each image, wherein each label characterizes one target sample. The training data might be acquired by manually analyzing the images or by using already available information about the used test compound. As an example, an image might be acquired after a target sample has been combined with a test compound, which is generally known to be toxic. Also, one or several image might be acquired while no test compound has been added to the target sample. In this case, it is evident that the target sample could develop in a natural manner and without any external effect.

The labels might have a binary structure or comprise gradual information about the target samples. As an example, the label might comprise the values "0" and "1", which correspond to the properties "non-toxic" and "toxic". In such a case, images might be provided during the training process, which correspond to target samples which have been combined with toxic compounds and to target samples which have been combined with compounds that do not have any toxic characteristic. An effective concentration or inhibitive concentration of the compounds may or may not be explicitly known and taken into account for obtaining a classifier.

Alternatively, the labels might have a non-binary structure and e.g. comprise values from "0" to "9", wherein the values correspond to different degrees of toxicity. In this case, the used test compounds might be provided with a constant concentration. As an example, each test compound might be provided in the amount of 10 µl, diluted into 100 µl solution representing the test sample. Since the test compound is provided in a constant concentration, the values ranging between "0" and "9" might indicate how toxic the used test sample is.

According to a further alternative, different concentrations of the test compound might be used, wherein the values ranging from "0" to "9" indicate the cumulative effect of the test sample. In other words, if the same test compound is used in different concentrations, the values from "0" to "9" might be an indication of the used sample concentration. Also, an image acquired from an experiment using a test compound with a higher toxicity being provided in a lower concentration might comprise a label with the same value as an image acquired from an experiment using a test compound with a lower toxicity being provided in a higher concentration.

Also, different concentrations of different test compounds might be used during the training phase. In this way, the classifier can learn to distinguish between different test compounds, wherein the effect of the compound concentration might be considered at the same time.

Furthermore, the labels might comprise values of "0" and "1", wherein the values correspond to "no effect" or "beneficial effect". In the same manner as described above, the labels might also comprise values ranging from "0" to "9", wherein in this case the number indicates the degree of beneficial effect.

Also, the labels might comprise values of e.g. "-1", "0" and "1", wherein "-1" indicates a negative/toxic effect on the neural cells, "0" indicates that the test compound does not have any effect and "1" indicates that the test compound has a positive/beneficial effect on the neural cells.

In a similar manner, the labels might comprise values between "-9" and "9", wherein the negative values indicate a negative/toxic effect, "0" indicates no effect at all and the positive values indicate a positive/beneficial effect on the neural cells. The magnitude of the value indicates the degree of the positive or negative effect.

It is significant that the training process and the testing process are matching to each other. In other words, it might not be appropriate to train a classifier with images provided by using test compounds that are all toxic to a certain degree, while during the testing process test compounds are used that, in contrast, have a beneficial effect.

According to a preferred embodiment of the present invention, the machine learning algorithm is based on an artificial neural network (ANN) and, in particular, on a convolutional neural network (CNN). Alternatively, the machine learning algorithm might also be based on a recurrent neural network (RNN), long short-term memory (LSTM), supervised learning, semi-supervised learning, or unsupervised learning.

Furthermore, the machine learning algorithm might be applied for detecting cells inside the testing chamber and, in particular, for detecting neurons and/or oligodendrocytes and/or radial glia and/or astrocytes within the acquired image and to determine the position of the cells and, in particular, the position of the neurons and/or oligodendrocytes and/or radial glia and/or astrocytes.

Accordingly, the machine learning algorithm might be trained with training data comprising images of the different cells and corresponding labels. The training data might be provided by manually analyzing the different cell types. Preferably, a rather large set of training data is provided during the training process. As an example, the training data might comprise at least 100, 1.000 or 10.000 image and corresponding labels. The labels might comprise values of "n", "o", "rg" and "a", each indicating one of the aforementioned cell types. According to an example, the cell type might be detected using the machine learning algorithm and the position of the cell nucleus might be determined using a shape detection algorithm. As an example, a software such as imageJ or Cellomics might be applied to determine the cell nucleus and to provide the coordinates of said nucleus.

In particular, an ANN or a CNN might be applied to detect the mentioned cell types.

Experimental tests have shown that by applying machine learning algorithms and particularly CNNs, a high recognition rate of the cell types can be achieved, thus allowing a precise detection of the distribution of the specific cells within the testing chamber.

Preferably, according to the present invention, the machine learning algorithm is applied for detecting a core area of the neurosphere. Accordingly, the machine learning algorithm might be trained using corresponding training data comprising a preferably larger number of images showing different neurosphere core areas and corresponding labels. The labels might comprise values of "0" and "1" indicating that no neurosphere core area is present in the evaluated image (= "0") or that a neurosphere core area is present (= "1"). As will be discussed in the context of the attached figures, the core area of a neurosphere can be identified as the area with the highest density of cells. In the acquired images, the core area typically has a sphere-like structure.

Alternatively, the neurosphere core area might be detected using classical image processing and shape detection algorithms.

Detecting the neurosphere core area might be significant to determine the migration distance for a specific target sample, as will be discussed below.

Preferably, according to the present invention, a general migration distance might be calculated based on the detection of the cells within the acquired image and the detection of the core area of the neurosphere.

In particular, determining the effect of a test compound on the migration distance comprises the following steps:
- determining the general migration distances of the furthest migrated cells from the core area in R radial directions; and
- calculating the mean value of the determined general migration distances to determine an average general migration distance for the analyzed test compound.

The general migration distance can be defined as the distance between the furthest migrated cell in one radial direction and the neurosphere core area. As an example, the migration distance might be defined between the furthest migrated cell in one radial direction and the outer edge of the neurosphere core area. Hence, once the neurosphere core area is determined and the cells within the acquired images are detected, the general migration distance can be calculated. As an example, four different radial directions can be defined such as a north, south, east and west direction with reference to the center of the neurosphere core area. Subsequently, in each of the defined directions, the furthest migrated cell and the position of its nucleus can be determined. The mean value of the general migration distance might then be determined by calculating the mean value of the four distances. Similarly, the distances of the furthest migrated cells might be determined in eight, 16 or 32 directions, before the mean value is calculated from the eight, 16 or 32 values.

Furthermore, the migration might also be measured in alternative ways either
(a) using the cell coordinates as discussed above or
(b) using the spatial distribution of fluorescence intensities in the image of the cell, or the distribution pattern in brightfield images. As an example, a machine learning algorithm or an image processing algorithm might be directly applied to the fluorescence or brightfield images, without identifying either the sphere core or the coordinates of specific cells.

Preferably, the coordinates of the center of the cells might be used for calculating the migration distance. Alternatively, any other singleton coordinate representing the position of the cell might be used for calculating the migration distance.

Furthermore, determining the effect of the test compound might be performed by comparing the average general migration distance for the analyzed test compound with an average general migration distance for a case without providing any test compound. As experimental tests have shown, the change of the general migration distance is a strong indicator for the effect of a test compound on the neural cells.

As an example, a threshold might be defined in advance, representing samples having a notable effect on the neural cells. If an image acquired after using a specific test sample is analyzed and shows an average general migration distance not reaching or exceeding the defined threshold, it can be determined that the test compound is toxic. To mention a simple example, the average general migration distance for a target sample not combined with any test compound might be determined as d_{agm,0} and the threshold might be defined as d_{agm,0} - 0,1 da_{gm,0}. Hence, a test sample resulting in an average general migration distance d_{agm} below d_{agm,0} - 0,1 d_{agm,0} might be classified as a toxic test compound with adverse effects. Choosing the defined threshold, general deviations within the target samples might be considered, which can be observed when no test compound is applied.

Alternatively, a threshold region might be defined for classifying a test sample as having no toxic effect. As an example, all test compounds resulting in an average general migration distance being in the range of d_{agm,0} - 0,1 d_{agm,0} < d_{agm} < d_{agm,0} + 0,1 d_{agm,0} might be classified as having no toxic effect on the neural cells. If an image is analyzed and shows an average migration distance not reaching d_{agm,0} - 0,1 d_{agm,0} or exceeding d_{agm,0} + 0,1 d_{agm,0}, it can be determined that the test compound is toxic. Hence, any average general migration distance being located outside the mentioned threshold range might be classified as toxic compounds.

Preferably, determining the effect of the test compound comprises the following additional steps:
- detecting the neurons in the acquired image using a machine learning algorithm and determining the relative number of the neurons being the absolute number of detected neurons divided by the absolute number of detected cells; and
- comparing the relative number of neurons with the relative number of neurons in the absence of the test compound.

Experimental data has shown that the relative number of neurons is characteristic for the effect of a test compound on neural cells. Hence, if the relative number of neurons is determined, this number might be used as an indicator for the toxicity and/or the beneficial effect of a test compound on neural cells.

The relative number of neurons is calculated by dividing the absolute number of detected neurons by the absolute number of all detected cells. Once the relative number of the neurons is calculated, this number can be compared with the relative number of neurons in a case where the test compound is absent (reference test).

Preferably, the neurons might be determined using an ANN. More preferably, the neurons are identified using a CNN.

If the determined relative number of neurons is close to the average relative number of neurons in cases where no test compound is used, it can be determined that the test compound has no effect or only a marginal effect on the neural cells. If the determined relative number of neurons exceeds a predetermined threshold, it can be concluded that the test compound has a significant effect on the neural cells.

Alternatively, the relative number of neurons might be determined using an image processing and/or shape recognition algorithm.

Also, a combination of image processing / shape recognition algorithm with a machine learning algorithm might be applied. As an example, a shape recognition algorithm might first be applied to detect whether a cell structure is present within an image. Subsequently, the detected image section might be fed into the machine learning algorithm in order to identify the specific type of the cell (e.g. neurons, oligodendrocytes, radial glia or astrocytes). Each of the sections identified by the shape recognition algorithm might be input into the machine learning algorithm until all cells present in an image are analyzed and until the overall number of the specific cells is identified.

According to a preferred embodiment of the present invention, determining the effect of the test compound comprises the following step:
- detecting the neurons in the acquired image using a machine learning algorithm and determining the neuronal migration distance based on the detected neurons within the acquired image and the detection of the core area of the neurosphere.

The determination of the neuronal migration distance can be done as discussed above, wherein in spite of considering the furthest migrated cell, the furthest migrated neuron in different directions (e.g. 4, 8 or 16) is considered. Experimental data has shown that considering the specific neuronal migration distance can increase the precision of the detection of the toxicity and/or beneficial effects of a test sample by providing more specific input data, which is characteristic for the development of neural cells.

Further, determining the effect of the test compound might comprise the following steps:
- detecting the oligodendrocytes in the acquired image and determining the relative number of the oligodendrocytes being the absolute number of detected oligodendrocytes divided by the absolute number of detected cells; and
- comparing the relative number of oligodendrocytes with the relative number of oligodendrocytes in the absence of the test compound.

Experimental data has shown that also the relative number of oligodendrocytes is characteristic for the effect of a test compound on neural cells. As a consequence, if the relative number of oligodendrocytes is determined, this number can be used as an additional indicator for the toxicity and/or the beneficial effect of the test compound.

The relative number of the oligodendrocytes is calculated by dividing the absolute number of detected oligodendrocytes by the absolute number of all detected cells. After calculating the relative number of oligodendrocytes, this number can be compared with the relative number of oligodendrocytes in a scenario where no test compound is used (reference test).

Preferably, the oligodendrocytes might be determined using a machine learning algorithm. Particularly, the oligodendrocytes can be identified using a CNN.

Experimental tests have shown that a high recognition rate can be achieved using a CNN, thus improving the overall precision of the results achieved by the method according to the present invention.

If the determined relative number of oligodendrocytes is close to the average relative number of oligodendrocytes in a scenario where no test compound is used, it can be concluded that the test compound has no effect or only a marginal effect on the neural cells. If the determined relative number of oligodendrocytes exceeds a predetermined threshold, it can be concluded that the test compound has a notable effect on the neural cells.

As an alternative, the relative number of oligodendrocytes might be determined using an image processing algorithm and/or a shape recognition algorithm.

According to a further preferred embodiment of the present invention, determining the effect of the test compound comprises the following step:
- detecting the oligodendrocytes in the acquired image using a machine learning algorithm and determining the oligodendrocyte migration distance based on the detected oligodendrocytes within the acquired image and the detection of the core area of the neurosphere.

The determination of the oligodendrocyte migration distance can be done as discussed above, wherein in spite of considering the furthest migrated cell, the furthest migrated oligodendrocyte in different directions (e.g. 4, 8 or 16) or the average of the migration distance of all oligodendrocytes is considered. Experimental data has shown that considering the specific oligodendrocyte migration distance (which can also be done in combination with the above-discussed parameters) can increase the precision of the detection of the toxicity and/or beneficial effects of a test sample by providing more specific input data, which is characteristic for the development of neural cells.

First experimental results have shown that the determination of the specific migration distance, which has been discussed above in the context of the neural migration distance and the oligodendrocyte migration distance can also be transferred to further cell types in order to increase the precision of the test results achieved with the present invention. In particular, the specific cell migration might be determined for radial glia and for astrocytes.

Accordingly, determining the effect of the test compound might comprise the following steps:
- detecting the radial glia in the acquired image using a machine learning algorithm and determining the relative number of the radial glia being the absolute number of detected radial glia divided by the absolute number of detected cells;
- comparing the relative number of radial glia with the relative number of radial glia in the absence of the test compound;
- detecting the radial glia proliferation and effects of test compounds on this process.

Experimental data has shown that also the relative number of radial glia is characteristic for the effect of a test compound on neural cells. Hence, if the relative number and the proliferation of radial glia is determined, these numbers might be used as indicators for the toxicity and/or the beneficial effect of a test compound on neural cells.

The relative number of the radial glia is calculated by dividing the absolute number of detected radial glia by the absolute number of all detected cells. Once the relative number of the radial glia is calculated, this number can be compared with the relative number of radial glia in a case where the test compound is absent (reference test). Radial glia proliferation might be determined simultaneously by staining for Ki67 in radial glia cells. Proliferation of cells might be determined by quantification of Ki67+ radial glia cells.

Preferably, the radial glia might be determined using a machine learning algorithm. More preferably, the radial glia are identified using a CNN.

If the determined relative number of radial glia is close to the average relative number of radial glia in a case where no test compound is used, it can be determined that the test compound has no effect or only a marginal effect on the neural cells. If the determined relative number of radial glia exceeds a predetermined threshold, it can be concluded that the test compound has a significant effect on the neural cells.

Alternatively, the relative number of radial glia might be determined using an image processing and/or shape recognition algorithm.

According to a preferred embodiment of the present invention, determining the effect of the test compound comprises the following step:
- detecting the radial glia in the acquired image using a machine learning algorithm and determining the radial glia migration distance based on the detected radial glia within the acquired image and the detection of the core area of the neurosphere.

The determination of the radial glia migration distance can be done as discussed above, wherein in spite of considering the furthest migrated cell the furthest migrated radial glia in different directions (e.g. 4, 8 or 16) or the average of the migration distance of all radial glia is considered. Experimental data has shown that considering the specific neural migration distance can increase the precision of the detection of the toxicity and/or beneficial effects of a test compound on neural cells by providing more characteristic input data.

Furthermore, determining the effect of the test compound might comprise the following additional steps:
- detecting the astrocytes in the acquired image using a machine learning algorithm and determining the relative number of the astrocytes being the absolute number of detected astrocytes divided by the absolute number of detected cells; and
- comparing the relative number of astrocytes with the relative number of astrocytes in the absence of the test compound.

Experimental data has shown that the relative number of astrocytes is characteristic for the effect of a test compound on neural cells. Hence, if the relative number of astrocytes is determined, this number might be used as an indicator for the toxicity and/or the beneficial effect of a test compound on neural cells.

The relative number of the astrocytes is calculated by dividing the absolute number of detected astrocytes by the absolute number of all detected cells. Once the relative number of the astrocytes is calculated, this number can be compared with the relative number of astrocytes in a case where the test compound is absent (reference test).

Preferably, the astrocytes might be determined using a machine learning algorithm. More preferably, the astrocytes are identified using a CNN.

If the determined relative number of astrocytes is close to the average relative number of astrocytes in a case where no test compound is used, it can be determined that the test compound has no effect or only a marginal effect on the neural cells. If the determined relative number of astrocytes exceeds a predetermined threshold, it can be concluded that the test compound has a significant effect on the neural cells.

Alternatively, the relative number of astrocytes might be determined using an image processing and/or shape recognition algorithm.

According to a preferred embodiment of the present invention, determining the effect of the test compound comprises the following step:
- detecting the astrocytes in the acquired image using a machine learning algorithm and determining the astrocyte migration distance based on the detected astrocytes within the acquired image and the detection of the core area of the neurosphere.

According to a preferred embodiment of the present invention, determining the effect of the test compound comprises a neural network or another classifier that computes an abstract variable associated with the effect of the compound. This abstract variable may have been obtained by training the neural network or the classifier using target samples labeled as "toxic" and "non-toxic", or labeled using values from "0" to "9". The neural network or the classifier may have been obtained based on a complete image of the sample, parts of an image of the sample, or a reduced or transformed version of the image of the sample.

The determination of the astrocyte migration distance can be done as discussed above, wherein in spite of considering the furthest migrated cell the furthest migrated astrocyte in different directions (e.g. 4, 8 or 16) or the average of the migration distance of all astrocytes is considered. Experimental data has shown that considering the specific astrocyte migration distance can increase the precision of the detection of the toxicity and/or beneficial effects of a test compound by providing more specific input data.

According to a preferred embodiment of the present invention, acquiring an image of the target sample might comprise the following steps:
- acquiring M x N sub-images of neighboring areas within the testing chamber; and
- assembling the M x N sub-images to a high-resolution image to be analyzed by the image evaluation module.

In this way, images can be provided having a high-resolution and, at the same time, capturing a relatively large area of the testing chamber. In this way, the precision of the results achieved within the present invention might be further increased, since significantly more characteristic information about the target sample can be evaluated.

As an example, M and N might be equal to 8, 10, 12 or 16. However, M and N do not need to be equal. Once the sub-images are acquired, these sub-images can be tiled to a high-resolution image that provides an increased amount of information in comparison to an image that is captured at once.

According to a preferred embodiment of the invention, the cells of the neurosphere might be marked with fluorescence markers and acquiring an image of the target sample might comprise the following steps:
- illuminating the target sample with a light source emitting at least partly in the ultraviolet range; and
- capturing the light emitted by the fluorescence marker with the image sensor.

By marking the cells of the neurosphere with fluorescence markers and applying fluorescence microscopy, even single cells of a small size can be reliably detected. The cells might be marked internally or externally. For this purpose, a fluorophore might be attached to the target cell biologically or chemically. Various labelling techniques, which are widely known from the prior art, might be used, such as protein labelling and genetic labelling, to only mention a few examples. Suitable fluorescence markers for neuronal identification are, in particular, β(III)Tubulin (TUBB3), MAP2, NeuN and neurofilament. For oligodendrocyte identification, 04, Olig2, MBP, MOG and SOX10 are particularly suitable markers. For radial glia identification, nestin, GFAP and GLAST are regarded as preferred markers. For astrocyte identification, GFAP, S100β and AQP4 are suitable markers. Finally, for radial glia proliferation, Ki67 is a suitable marker.

According to a further embodiment of the present invention, a measurement apparatus for automatically analyzing the effect of a test sample is provided, wherein the apparatus comprises:
- a testing chamber for receiving a target sample and a test sample;
- a target sample providing module for providing the target sample in the testing chamber;
- a test sample providing module for providing the test sample in the testing chamber;
- an image acquisition module for acquiring an image of the target sample inside the testing chamber, wherein the image acquisition module comprises at least an image sensor and a lens, wherein the lens is configured to image the target sample onto the image sensor;
- an image evaluation module for analyzing the acquired image using a machine learning algorithm; and
- an outputting module for outputting the determined results on the effect of the test compound.

The target sample providing module might comprise a target sample storage chamber, a supply tube and a pump. Similarly, the test sample providing module might comprise a test sample storage chamber, a supply tube and a pump.

The target sample providing module and the test sample providing module allow a measurement apparatus with a high degree of automation, enabling a highly reproducible testing environment.

The further components of the measurement apparatus might be the same as discussed above in the context of the method according to the present invention.

Preferably, the measurement apparatus might comprise an additional positioning module configured for the relative positioning between the target sample and the image acquisition module. In particular, the positioning module might be configured to move a positioning stage holding the testing chamber. In this way, the positioning module allows to capture M x N sub-images of the target sample and to combine the M x N sub-images to a coherent and high-resolution image.

According to a preferred embodiment, the measurement apparatus might comprise an image acquisition module with a light source emitting at least partly in the ultraviolet range, wherein the light source comprises, in particular, a mercury-vapor, a laser light source or a high-power LED. By this, the fluorophores used for marking the cells might be excited and the visibility of the cells is significantly increased.

In the following, the present invention will be illustrated with specific embodiments shown in the enclosed figures. In particular, the figures illustrate the following:
- Fig. 1:: an embodiment of the method according to the present invention,
- Fig. 2:: an embodiment of the measurement apparatus according to the present invention,
- Fig. 3:: different images of the target sample acquired after a predetermined incubation time, wherein different test samples are applied,
- Fig. 4:: a schematic representation of the training data used for training the classifier, wherein the training data comprises binary training flags,
- Fig. 5:: a further schematic representation of the training data, wherein the training data comprises binary training flags and additional information about the concentration of the test compound,
- Fig. 6:: a schematic illustration of different cell types identified in the testing chamber,
- Fig. 7:: a schematic illustration for calculating the average general migration distance, and
- Fig. 8:: a schematic representation of M x N sub-images tiled to a high-resolution image.

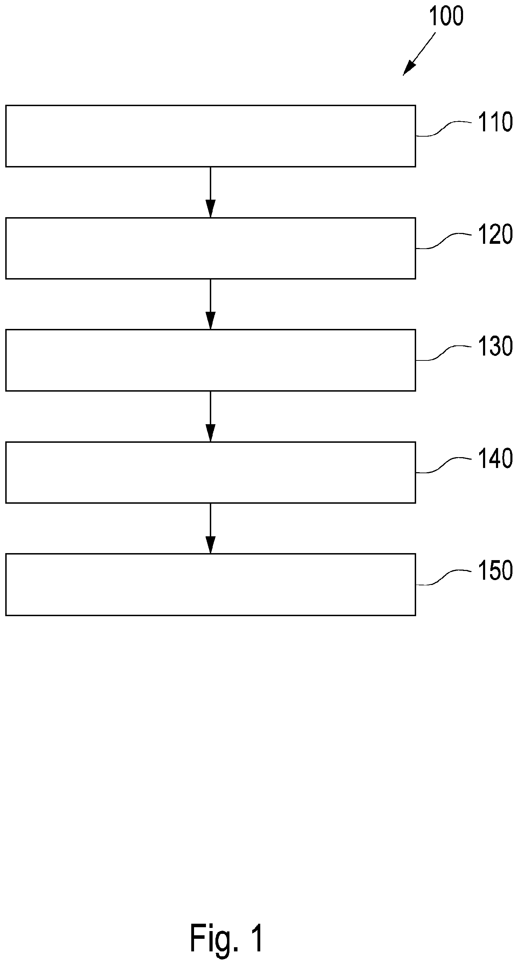

In Fig. 1, a first embodiment of the method 100 according to the present invention is illustrated. The method 100 comprises the steps of providing a target sample in a testing chamber 110, providing the test sample in the testing chamber 120, acquiring an image of the target sample after a predetermined incubation time 130, determining the effect of the test compound analyzing the acquired image and applying a machine learning algorithm 140 and outputting the determined effect of the test compound 150.

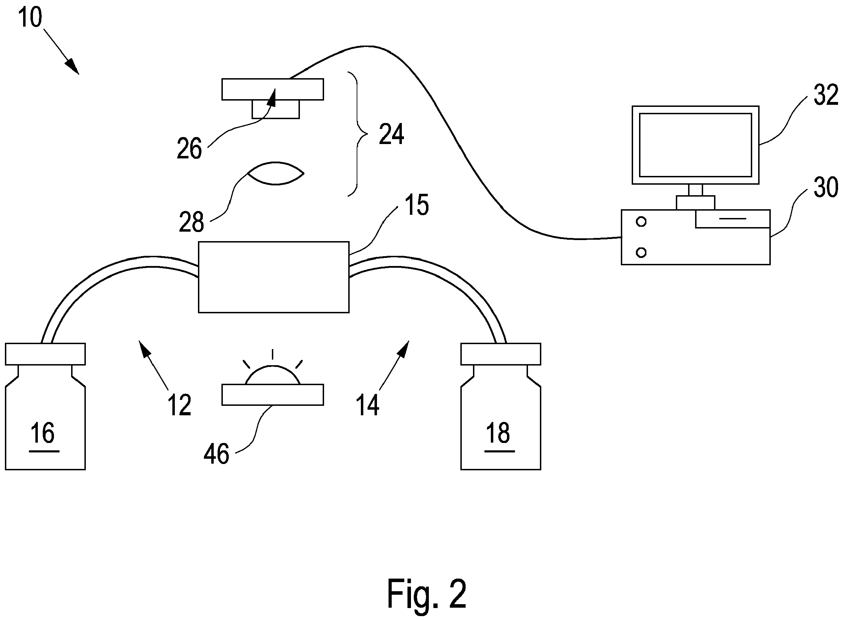

In Fig. 2, a corresponding measurement apparatus 10 according to the present invention is illustrated. The measurement apparatus 10 comprises a target sample providing module 12 and a test sample providing module 14. The target sample providing module 12 comprises a target sample storage device storing the target sample 16 and a tube providing the target sample 16 into the testing chamber 15. Accordingly, the test sample providing module 14 comprises a test sample storage device storing the test sample 18 and a tube providing the test sample 18 into the testing chamber 15. Once the target sample 16 and the test sample 18 are provided inside the testing chamber 15, the combined samples 16, 18 can interact with each other. After a predefined incubation time, the image acquisition module 24 acquires an image of the target sample 16 inside the testing chamber 15. The image acquisition module comprises an image sensor 26 and a lens 28 configured to image the target sample to the image sensor 26. The target sample 16 is illuminated via the light source 46, which can be provided in form of an LED. The acquired image is transferred from the image acquisition module 24 to the image evaluation module 30, which analyzes the captured target sample 16 using a machine learning algorithm. The results of the analysis are outputted using the outputting module 32. Preferably, the outputting module 32 can comprise a display configured to optically visualize the results of the analysis.

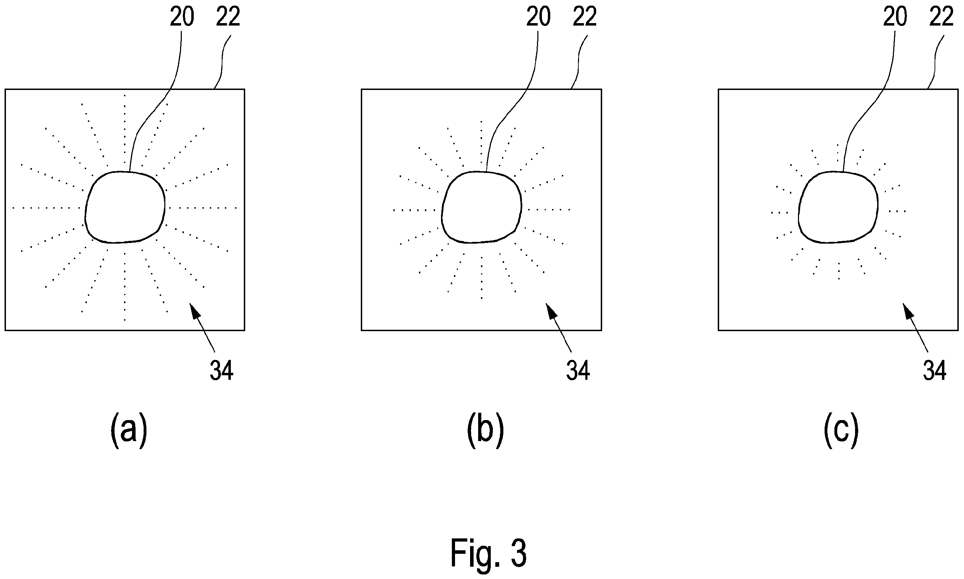

Some exemplary images 22 of the target sample 16 acquired by the image acquisition module 24 are schematically illustrated in Fig. 3. In each of Figs. 3(a) to (c), a neurosphere 20 having a sphere-like shape is illustrated and cells 34, which have migrated from the neurosphere 20. The neurosphere 20 has a core area, which is defined by a high concentration of cells. In the illustrated figures, Fig. 3 (a) shows a target sample that was combined with a test sample, wherein the test sample did not compromise any test compound. In other words, Fig. 3 (a) illustrates the scenario of a natural cell migration in the absence of any toxic compound. The illustrated pattern might also be referred to as a healthy cell migration pattern. In contrast, Fig. 3 (b) shows a target sample, which was combined with a toxic test compound. As can be seen from Fig. 3 (b) the cells 34 show a decreased migration distance when compared to the scenario captured in Fig. 3 (a). Further, Fig. 3 (c) shows an image with a more significantly reduced migration distance of the cells 34. In other words, the distance of the furthest migrated cells 34 illustrated in Fig. 3 (c) is significantly reduced in comparison with the scenario illustrated in Figs. 3 (a) and (b). In the case illustrated in Fig. 3 (c), the test compound might have a higher toxicity when compared to the test compound used in the scenario captured in Fig. 3 (b). Alternatively, the test compound used in the case captured in Fig. 3 (c) might be the same test compound as in the case shown in Fig. 3 (b), while the used concentration in the case shown in Fig. 3 (c) might be higher than in the case shown in Fig. 3 (b). The illustrated figures show that the effect of the test compound might be derived by using the information provided in the captured images.

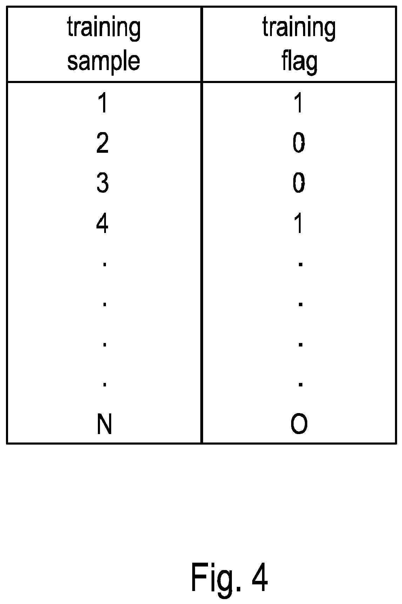

Fig. 4 gives an example on how the training data might be designed. The training data might comprise N images captured from N different training samples, wherein each image might be captured using different test compounds. In addition, the training data might comprise a binary flag, indicating whether the used test compound was known to be toxic or not. Alternatively, the binary flag might indicate whether the used test compound was known to have a beneficial effect on neural cells. In this example, the concentration of the test compound is not considered during the training process. Hence, during the subsequent analysis process, the classifier trained with the training data might classify acquired images as belonging to one of two classes, e.g. to a toxic or a non-toxic class.

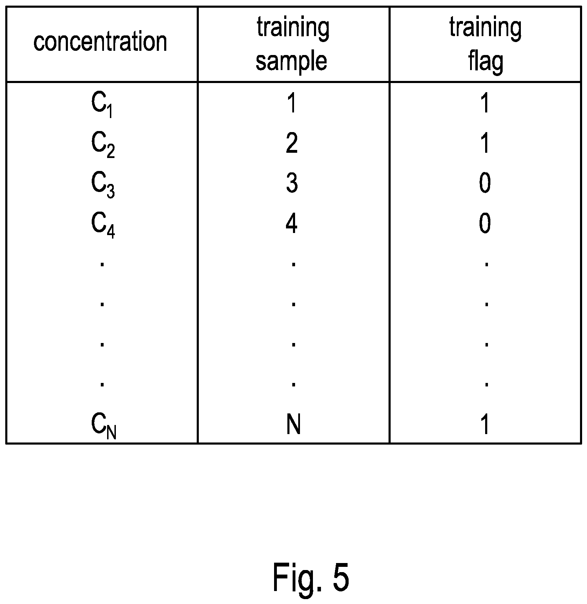

Fig. 5 shows an additional example on how the training data might be designed. In this example, the training data does not only comprise training images corresponding to training samples and flags classifying the images to corresponding classes of test compound. In addition, the training data illustrated in Fig. 5 comprises supplementary information about the concentration of the test compound. Hence, during the analysis process, the trained classifier might output whether the analyzed image is considered as a toxic or non-toxic compound considering the concentration of the test compound.

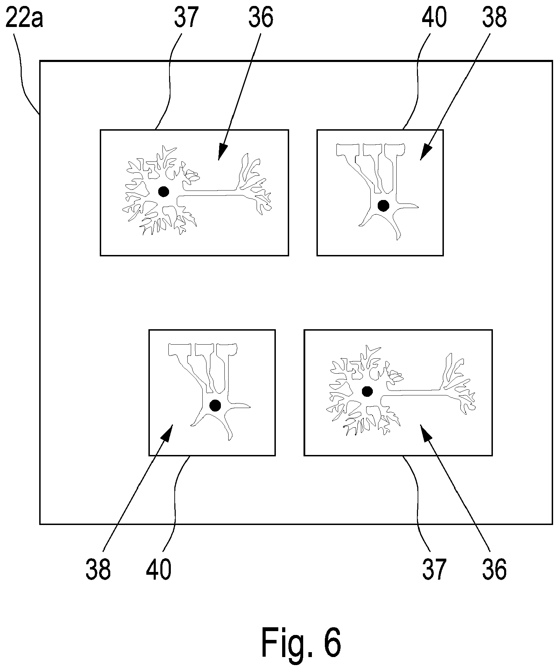

In Fig. 6, the detection of the specific cell types within an analyzed image section 22a is illustrated. As can be seen in Fig. 6, different regions of interest 37, 40 might be identified. As an example, a shape detection algorithm might be used first to detect a potential cell. Subsequently, the information comprised in the identified region of interest 37, 40 might be input to a trained classifier, which is based on a machine learning algorithm. The classifier, which is previously trained by providing images of specific cell types and corresponding flags, can determine the specific cell type with a rather high precision. As an example, the classifier might determine that the cells comprised in the regions of interest 37 are neurons 36 and that the cells comprised in the regions of interest 40 are oligodendrocytes 38. In a similar manner, further cell types such as radial glia and/or astrocytes might be determined using the trained classifier. Once the specific cell type is recognized, the acquired image can be analyzed in the above described manner to determine the relative number of the specific cells within the test chamber 15. In addition, once the specific cell type is recognized and the position of the specific cell type is determined (e.g. by determining the position of the cell core), the specific migration distance can be calculated.

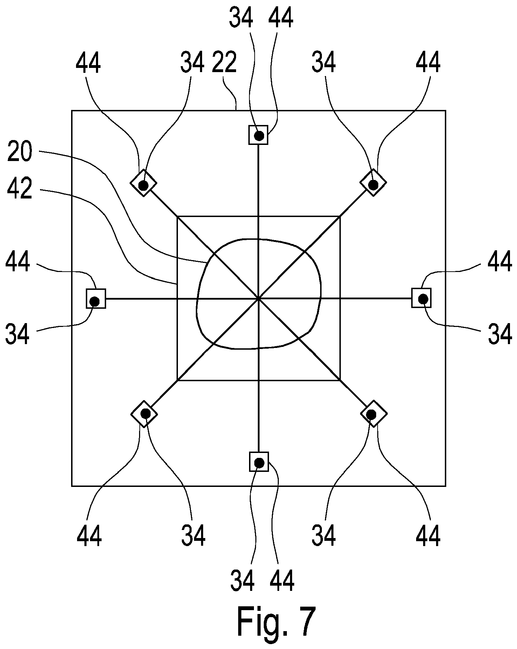

Fig. 7 shows a further embodiment of the present invention. In the illustrated example, the neurosphere 20 might be detected using a machine learning algorithm. In addition, the cells 34 might also be detected using a machine learning algorithm. Alternatively, the neurosphere 20 and the cells 34 might be detected using traditional image processing and/or shape recognition algorithms. Also, image processing and/or shape recognition algorithms might be combined with machine learning algorithms. As an example, the regions of interest 42, 44, in which a cell or a neurosphere core might be expected, could be determined by a traditional image processing and/or shape recognition algorithm and subsequently be analyzed using a machine learning algorithm. Once the neurosphere 20 and the furthest migrated cells 34 in different radial directions are determined, the migration distance can be calculated in the different directions. In the example illustrated in Fig. 7, the migration distance in eight directions is calculated and the average cell migration distance is determined as the mean value of the single migration distances.

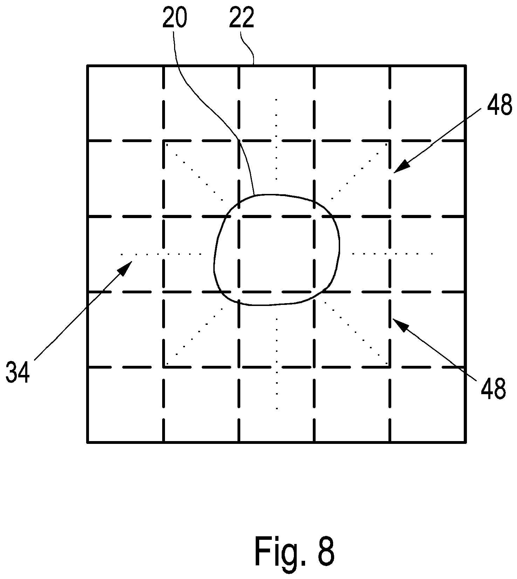

Finally, Fig. 8 schematically illustrates how M x N sub-images 48 might be acquired and subsequently tiled together to a high-resolution image 22. Providing a high-resolution image 22 significantly contributes to increasing the precision of the method and the results achieved with the method according to the present invention. The sub-images 48 might be acquired by applying a movable positioning stage (not shown in Fig. 8) configured to move the testing chamber 15 relative to the image acquisition module 24.

### Reference Signs

- 10: measurement apparatus
- 12: target sample providing module
- 14: test sample providing module
- 15: testing chamber
- 16: target sample
- 18: test sample
- 20: neurosphere
- 22: image
- 22a: image section
- 24: image acquisition module
- 26: image sensor
- 28: lens
- 30: image evaluation module
- 32: outputting module
- 34: cells
- 36: neurons
- 37: region of interest
- 38: oligodendrocytes
- 40: region of interest
- 42: region of interest
- 44: region of interest
- 46: light source
- 48: sub-images
- 100: method according to one embodiment of the invention
- 110: method step of providing a target sample in a testing chamber
- 120: method step of providing a test sample in the testing chamber
- 130: method step of acquiring an image of the target sample
- 140: method step of determining the effect of the test compound
- 150: method step of outputting the determined effect of the test compound

## Claims

1. Method (100) for automatically determining the effect of a test compound on neural cells (14), wherein the method (100) comprises at least the following steps:
- providing (110) a target sample (16) in a testing chamber (15), wherein the target sample (16) comprises a neurosphere (20);
- providing (120) a test sample (18) in the testing chamber (15), wherein the test sample (18) comprises the test compound;
- acquiring (130) an image (22) of the target sample (16) after a predetermined incubation time using an image acquisition module (24), wherein the image acquisition module (24) comprises at least an image sensor (26) and a lens (28) for imaging the target sample (16) onto the image sensor (26);
- determining (140) the effect of the test compound by analyzing the acquired image (22) using an image evaluation module (30), wherein the image evaluation module (30) is configured to apply a machine learning algorithm to identify the effect of the test compound; and
- outputting (150) the determined effect of the test compound using an outputting module (32).

2. Method (100) according to claim 1, **characterized in that** analyzing the acquired image (22) using an image evaluation module (30) comprises the following steps:
- inputting the acquired image (22) into a pre-trained classifier, wherein the classifier is trained using a machine learning algorithm; and
- classifying the test compound using the pre-trained classifier.

3. Method (100) according to claim 1 or 2, **characterized in that** the machine learning algorithm is based on an artificial neural network, ANN, and, in particular, on a convolutional neural network, CNN.

4. Method (100) according to any of claims 1 to 3, **characterized in that** the machine learning algorithm is applied for detecting cells (34) inside the testing chamber and, in particular, for detecting neurons (36) and/or oligodendrocytes (38) and/or radial glia and/or astrocytes within the acquired image (22) and to determine the position of the cells (34) and, in particular, to determine the position of the neurons (36) and/or oligodendrocytes (38) and/or radial glia and/or astrocytes.

5. Method (100) according to any of claims 1 to 4, **characterized in that** the machine learning algorithm is applied for detecting a core area of the neurosphere (20).

6. Method (100) according to claims 4 and 5, **characterized in that** a general migration distance is calculated based on the detection of the cells (34) within the acquired image (22) and the detection of the core area of the neurosphere (20).

7. Method (100) according to claim 6, **characterized in that** determining the effect of the test compound comprises the following steps:
- determining the general migration distances of the furthest migrated cells (34) from the core area in R radial directions; and
- calculating the mean value of the determined general migration distances to determine an average general migration distance for the analyzed test compound.

8. Method (100) according to claim 7, **characterized in that** determining the effect of the test compound is performed by comparing the average general migration distance for the analyzed test compound with an average general migration distance for a case without providing any test compound.

9. Method (100) according to any of claims 1 to 8, **characterized in that** determining the effect of the test compound comprises the following additional steps:
- detecting the neurons (36) in the acquired image (22) using a machine learning algorithm and determining the relative number of the neurons (36) being the absolute number of detected neurons (36) divided by the absolute number of detected cells (34); and
- comparing the relative number of neurons (36) with the relative number of neurons (36) in the absence of the test compound.

10. Method (100) according to any of claims 1 to 9, **characterized in that** determining the effect of the test compound comprises the following additional steps:
- detecting the oligodendrocytes (38) in the acquired image (22) and determining the relative number of the oligodendrocytes (38) being the absolute number of detected oligodendrocytes (38) divided by the absolute number of detected cells (34); and
- comparing the relative number of oligodendrocytes (38) with the relative number of oligodendrocytes (38) in the absence of the test compound.

11. Method (100) according to any of claims 1 to 10, **characterized in that** acquiring an image (22) of the target sample (16) comprises the following steps:
- acquiring M x N sub-images (48) of neighboring areas within the testing chamber (15); and
- assembling the M x N sub-images (48) to a high-resolution image (22) to be analyzed by the image evaluation module (30).

12. Method (100) according to any of claims 1 to 11, **characterized in that** the cells (34) of the neurosphere (20) are marked with fluorescence markers and that acquiring an image (22) of the target sample (16) comprises the following steps:
- illuminating the target sample (16) with a light source (46) emitting at least partly in the ultraviolet range; and
- capturing the light emitted by the fluorescence marker with the image sensor (26).

13. Measurement apparatus (10) for automatically analyzing the effect of a test sample (18), comprising:
- a testing chamber (15) for receiving a target sample (16) and a test sample (18);
- a target sample providing module (12) for providing the target sample (16) in the testing chamber (15);
- a test sample providing module (14) for providing the test sample (18) in the testing chamber (15);
- an image acquisition module (24) for acquiring an image (22) of the target sample (16) inside the testing chamber (15), wherein the image acquisition module (24) comprises at least an image sensor (26) and a lens (28), wherein the lens (28) is configured to image the target sample (16) onto the image sensor (26);
- an image evaluation module (30) for analyzing the acquired image (20) using a machine learning algorithm; and
- an outputting module (32) for outputting the determined results on the effect of the test compound.

14. Measurement apparatus (10) according to claim 13, **characterized by** an additional positioning module configured for the relative positioning of the target sample (16) and the image sensor (26).

15. Measurement apparatus (10) according to claims 13 or 14, **characterized in that** the image acquisition module (24) comprises a light source (46) emitting at least partly in the ultraviolet range, wherein the light source (46) comprises, in particular, a mercury-vapor, a laser light source or a high-power LED.
